Europäisches Patentamt

European Patent Office

Office européen des brevets

(11) Veröffentlichungsnummer: **0 275 485 B1**

(12) **EUROPÄISCHE PATENTSCHRIFT**

(45) Veröffentlichungstag der Patentschrift: **06.05.92**

(21) Anmeldenummer: **87118576.5**

(22) Anmeldetag: **15.12.87**

(51) Int. Cl.5: **B29C 47/40**

(54) **Doppelschneckenextruder.**

(30) Priorität: **13.01.87 DE 3700771**

(43) Veröffentlichungstag der Anmeldung:
**27.07.88 Patentblatt 88/30**

(45) Bekanntmachung des Hinweises auf die
Patenterteilung:
**06.05.92 Patentblatt 92/19**

(84) Benannte Vertragsstaaten:
**AT FR GB**

(56) Entgegenhaltungen:
**DE-A- 3 420 918**
**DE-B- 1 554 920**
**GB-A- 1 483 302**
**US-A- 3 766 797**

(73) Patentinhaber: **Weber, Johannes, Dr.**
**Bamberger Strasse**
**W-8640 Kronach(DE)**

(72) Erfinder: **Weber, Johannes, Dr.**
**Bamberger Strasse**
**W-8640 Kronach(DE)**

(74) Vertreter: **Schaumburg, Thoenes & Englaen-**
**der**
**Mauerkircherstrasse 31 Postfach 86 07 48**
**W-8000 München 86(DE)**

## Beschreibung

Die Erfindung betrifft einen Doppelschnecken-extruder, umfassend zwei konische Extruder-schnecken, deren Schnekkenwellen einen der Koni-zität der Extruderschnecken entsprechenden Win-kel miteinander bilden, und eine Antriebsvorrichtung mit einem eine der Schneckenwellen antreibenden Antriebsmotor, während die andere Schnekkenwelle von der ersten Schneckenwelle über ein Kegelzahnradgetriebe antreibbar ist.

Ein derartiger Doppelschneckenextruder ist beispielsweise aus der US-PS 3,605,188 bekannt.

Aus der DE-A-3 420 918 ist ein Getriebe bei einem konischen Doppelschneckenextruder mit pa-rallelen Getriebewellen und pfeilverzahnten zylindri-schen Stirnrädern bekannt. Diese Lösung ist bei einem Doppelschneckenextruder der eingangs genannten Art nicht einsetzbar.

Der Erfindung liegt die Aufgabe zugrunde, ei-nen Doppelschneckenextruder der eingangs be-schriebenen Art so auszubilden, daß auf engem Raum ein hohes Drehmoment auf die Schneckenwellen übertragen werden kann, ohne daß dabei gleichzeitig Axialkräfte auf die Schneckenwellen ausgeübt werden.

Diese Aufgabe wird erfindungsgemäß dadurch gelöst, daß das Kegelzahnradgetriebe zwei Sätze von gegenläufig schräg verzahnten kegeligen Stirnrädern umfaßt. Als kegelige Stirnräder werden dabei in der vorliegenden Erfindung solche "Kegelzahnräder" bezeichnet, bei denen die durch den Kopfkreis und den Fußkreis der Verzahnung verlaufenden Flächen sich nicht schneiden, sondern parallel zueinander gerichtet sind.

Mit der erfindungsgemäßen Ausbildung des Kegelzahnradgetriebes können nicht nur bei geringer Baulänge hohe Drehmomente auf die Schnek-kenwellen übertragen werden, sondern die Übertragung der Drehmomente erfolgt auch ohne die gleichzeitige Übertragung von Axialkräften, die in den herkömmlichen Bauformen durch geeignete Drucklager aufgefangen werden müssen. Auf diese Weise erhält das Getriebe einen sehr einfachen Aufbau.

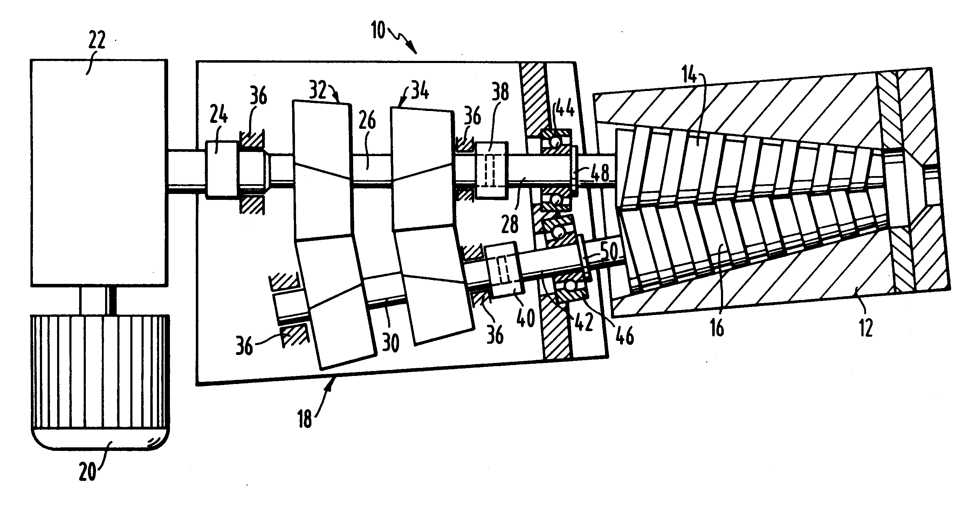

Die folgende Beschreibung erläutert in Verbindung mit der beigefügten Zeichnung die Erfindung anhand eines Aüführungsbeispieles. Die einzige Fi-gur zeigt einen schematischen Längsschnitt durch einen erfindungsgemäßen Doppelschnekkenextruder.

Der allgemein mit 10 bezeichnete Doppelschneckenextruder umfaßt ein Schneckengehäuse 12 mit zwei konischen Extruderschnecken 14 und 16 sowie ein allgemein mit 18 bezeichnetes Getriebe.

Ein Antriebsmotor 20 treibt dabei über ein Untersetzungsgetriebe 22 und über eine Kupplung 24 eine erste Getriebewelle 26 an, die mit der Schnek-kenwelle 28 der Extruderschnecke 14 drehfest verbunden ist. Die erste Getriebewelle 26 ist mit einer zu ihr parallelen zweiten Getriebewelle 30 durch zwei gegenläufig schrägverzahnte Kegelzahnradsätze 32 und 34 gekoppelt. Beide Getriebewellen 26 und 30 sind in nur schematisch angedeuteten Lagern 36 gelagert und durch Kupplungen 38, 40 mit der Schneckenwelle 28 der Extruderschnecke 14 bzw. der Schneckenwelle 42 der Extruderschnecke 16 verbunden, so daß das Getriebe 18 von dem Extrudergehäuse 12 und den Schneckenwellen 28, 42 getrennt werden kann.

Während durch die Getriebeanordnung keine Axialkräfte auf die Getriebewellen und damit auf die Schneckenwellen ausgeübt werden, erfahren die Extruderschnecken 14 und 16 durch das zu extrudierende Material jeweils eine axiale Rückdruckkraft in Richtung auf das Getriebe 18. Daher sind die Schneckenwellen 28 und 42 jeweils in einem diese Rückdruckkräfte aufnehmenden Rückdrucklager 44 bzw. 46 gelagert, die axial zwischen den Extruderschnecken 14, 16 und den Kupplungen 38, 40 angeordnet sind. Die Schneckenwellen 28 und 42 stützen sich dabei jeweils mit Hilfe eines Bundes 48 bzw. 50 oder dergleichen an dem jeweiligen Rückdrucklager 44 bzw. 46 ab.

## Patentansprüche

1. Doppelschneckenextruder umfassend zwei ko-nische Extruderschnecken, deren Schnecken-wellen einen der Konizität der Extruderschnek-ken entsprechenden Winkel miteinander bil-den, und eine Antriebsvorrichtung mit einem eine der Schneckenwellen antreibenden An-triebsmotor, während die andere Schnecken-welle von der ersten Schneckenwelle über ein Kegelzahnradgetriebe antreibbar ist, dadurch **gekennzeichnet,** daß das Kegelzahnradgetriebe zwei Sätze (32, 34) von gegenläufig schrägverzahnten kegeligen Stirnrädern umfaßt.

## Claims

1. Twin-screw-extruder comprising two cone-shaped extruder screws, the screw shaft of which forms an angle corresponding to the conicity of the extruder screws, and a driving device having an engine driving one of the screw shafts, whereas the other screw shaft can be driven by the first screw shaft via a bevel gear drive, **characterized** in that the bevel gear drive comprises two sets (32, 34) of conical-shaped spur gears having helical gearing countercurrent to each other.

## Revendications

1. Extrudeuse à deux vis sans fin comprenant deux vis sans fin d'extrudeuses d'une forme conique dont les arbres du vis sans fin ensemble forment un angle correspondant à la conicité des vis sans fin d'extrudeuses et un dispositif d'entraînement ayant un moteur d' entrainement, entrainant l'un des arbres du vis sans fin, pendant que l'autre arbre du vis sans fin peut être entrainé par le premier arbre du vis sans fin via un train d'engrenages conique, **characterisé** en ce que le train d'engrenages conique comprend deux groupes (32, 34) de roues dentées droits d'une forme conique ayant des engrenages hélicoidaux à marche contraire.